# EUROPEAN PATENT SPECIFICATION

(11) **EP 3 111 751 B1**
(45) Date of publication and mention of the grant of the patent: **13.06.2018**
(21) Application number: 15174555.1
(22) Date of filing: 30.06.2015
(51) Int. Cl.: A01G 9/04, A01G 9/10

(54) **HARVEST TRAY**
ERNTESCHALE
PLATEAU DE RÉCOLTE

(43) Date of publication of application: 04.01.2017
(73) Proprietor: Spisa Holding AB, 421 32 Västra Frölunda (SE)
(72) Inventor: Jönsson, Ulf, 1410 Waterloo (BE)
(74) Representative: AWA Sweden AB

(56) References cited:
- EP-A1- 0 498 971
- CH-A- 501 352
- DE-U1-202010 015 471
- US-A- 5 022 183

## Description

### Technical Field

The present invention relates to a harvest tray for carrying potted herbs. It also relates to a system comprising a harvest tray and a potted herb, as well as a method for harvesting potted herbs.

### Background of the invention

Herbs are used for culinary purposes, in manufacturing and food industries. The major commercial form of culinary herbs is the dried product, in part because herbs in this form are easy to transport, store and market. A fairly recent development in herb production is fresh herbs, which may be sold in pots or in a harvested bundle. The herbs will provide a small volume of fresh material to households while, when sold in a pot, being an attractive ornamental plant.

Industrial green house production of herbs commonly comprises the steps of sowing and allowing the seed to germinate in a germination chamber, until it has become a seedling. The duration depends on the herb in question. The seedling will then generally be transplanted and/or moved to a nursery. The herb seedling is cultivated in the nursery, after which the herb is transplanted and/or moved to a gully system in a green house. In the gully system the herbs may take as much water and fertilizer as needed from below, where a nourishing mix of this is provided. The herbs may be moved relative each other in the gully system, so that herbs may grow without blocking or being blocked until they are ready for harvest.

When the herb is ready for harvest it is usually manually picked from the gully system and put in e.g. a plastic bag by an operator. Once the operator has provided the plastic bag around the potted herb, the operator may place the potted herb in a container which may be transported to e.g. a store. Hence, handling of potted herbs is usually a labour intensive work. As the use of potted herbs is growing, there exists a need for providing possibilities appliances and methods that simplifies the handling of potted herbs in the green house and thereby reduces the labour-need and/or provides for a faster process. An example of prior known solutions is presented in CH 501 352 A which discloses a culture dish for growing decorative plants and flowers, where the dish is provided with separate compartments for receiving a disc shaped culture media which swells upon irrigation. However, such solutions are more suitable for small scale operations and are still prone to the same general drawbacks as discussed in the foregoing terms of labour intensive handling in a green house environment. An object of the invention is therefore to provide an appliance that simplifies the handling of potted herbs in a green house. Another object is to provide an improved method for handling of potted herbs. These and other objectives, which will become apparent in the following, are achieved by the present invention as defined in the accompanying claims.

### Summary of the invention

The present invention solves the above-identified and other objectives by providing a harvest tray according to claim 1. The invention relates to a harvest tray for carrying potted herbs. The harvest tray comprises:
- a rectangular base portion, having two parallel long sides and two parallel short sides, wherein an extension direction of the two long sides defines a longitudinal direction of the harvest tray,
- a pair of side walls, each side wall being arranged in the direction of the long sides of the base portion, respectively, and extending in a vertical direction from the base portion, said side walls defining two sides of a reception cavity, and
- dividing elements, arranged in a row in said reception cavity, said dividing elements being distanced from the side walls defining the reception cavity, at least along a portion of their height, such that an open passage is formed on each side of the row of dividing elements along a portion of the height of the reception cavity in the longitudinal direction of said harvest tray, each passage being open towards at least one short side and towards the top of said harvest tray.

With a harvest tray according to the invention, it becomes possible to access the potted herbs provided in the reception cavity both from above and from the short sides of the harvest tray. This is beneficial as it provides for easier access for e.g. gripping arms in automated processes. By providing access from the short sides of the harvest tray, it is not necessary to access the potted herbs from above, which thereby reduces the risk of damaging the herbs if an automated process is used in the packaging of the herbs. Hence, a harvest tray according to the present invention provides for horizontal access to the potted herbs and vertical lift thereof.

According to one exemplary embodiment, each passage being open towards each of said short sides of said harvest tray. By providing the passages open at both short sides it is possible to access the potted herbs horizontally from either side. By that, it is possible to either utilize e.g. packaging robots with dual arms, accessing potted herbs from either side. Furthermore, it is not necessary to provide the harvest tray with a specific side first in a processing system.

According to one exemplary embodiment, said harvest tray comprises two outer side walls extending along the long sides of the base portion of said harvest tray and an intermediate side wall, wherein said intermediate side wall is arranged between the pair of outer side walls, such that two reception cavities are provided in the harvest tray, wherein each reception cavity is provided with dividing elements arranged along the longitudinal direction of the harvest tray, such that each reception cavity comprises two open passages.

Hence, the side walls may be either outer side walls or intermediate side walls, separating the reception cavities from each other.

According to one exemplary embodiment, the dividing elements are in contact with the adjacent side walls at their lower portions, such that each passage extends over a portion of the distance between the top of the harvest tray and downwards towards the base portion.

Hence, according to this exemplary embodiment, the lower portion of each dividing element may have a larger extension in the transversal direction of the harvest tray, as compared to the extension of the respective upper portion of the dividing element. Thereby, the passages in the longitudinal extension of the harvest tray will not extend all the way down to the base portion of the harvest tray. As the harvest tray, or at least the passages thereof, is open in the upwards direction, the top of the harvest tray is considered to be the portion of the harvest tray being furthest away from the base portion.

According to one exemplary embodiment, said side walls extend to the top of the harvest tray. Hence, according to this exemplary embodiment, the height of the harvest tray is defined by the outer side walls.

According to one exemplary embodiment, said dividing elements extend to the top of the harvest tray.

According to one exemplary embodiment, the height of the dividing elements is the same as the height of the outer side walls. According to one exemplary embodiment, the height of the intermediate side wall is the same as the height of the outer side walls. According to one exemplary embodiment, the height of the outer short side walls is the same as the height of the outer side walls. It is not necessary that the height of the outer side walls, the intermediate side walls and the outer short side walls are the same. It may however be beneficial as it provides for an even and good support of the potted herb in the harvest tray.

According to one exemplary embodiment, each passage extends over more than 50% of the distance from the harvest tray's top towards the base portion, or more preferably over more than 60% of said distance, and even more preferably over more than 70% of said distance. As the passage should be open upwards, the extension of the passage is from the top plane of the harvest tray and downwards.

According to one exemplary embodiment, the harvest tray further comprises outer short side walls provided at each short side of the harvest tray, said outer short side walls are in contact with the adjacent side walls at their lower portions thereof, and at least one of said outer short side walls are distanced from the adjacent side walls at an upper portion thereof. By this, the harvest trays are not completely open at their short sides and a potted herb may be placed in the reception cavity between a dividing element and an outer short side wall and thereby be supported by them.

According to one exemplary embodiment, all outer short side walls are distances from the adjacent side at an upper portion thereof. By this, the passages formed in the longitudinal direction of the harvest tray extend over the entire harvest tray.

According to one exemplary embodiment, each of said outer short side walls have a similar cross-sectional profile as said dividing elements and are aligned with each row of dividing elements, whereby the open passages extends along the entire length of the harvest tray. Providing the same profile, in a cross-section taken in the transversal direction of the harvest tray and in the middle of each dividing element or outer short side wall, and aligning the outer short side walls with the dividing elements is beneficial as it provides for straight passages in the harvest tray.

According to one exemplary embodiment, the harvest tray is hollow with a rectangular opening in the base portion, wherein said opening is provided on the side of said base portion that is directed away from the reception cavity of the harvest tray.

According to one exemplary embodiment, the outer dimensions of the top of the harvest tray extend over a smaller area than the rectangular opening in the base portion of said harvest tray.

According to one exemplary embodiment, the outer side walls, the dividing elements, the intermediate side wall, if present, and the short side walls, if present, are hollow and slanted, such that each of said walls and dividing elements has a smaller width at the top side than their respective portions being adjacent the base portion of the harvest tray.

Providing the harvest tray hollow is beneficial for several reasons. Firstly, the weight of the harvest tray is reduced. Secondly, the harvest trays thereby become stackable in one another, which reduce the transport volume of them when they are empty. Both the reduced weight and the reduced transport volume are beneficial from an environmental perspective.

According to one exemplary embodiment, the dividing elements have a rounded profile at the top side.

According to one exemplary embodiment, the outer side walls and the intermediate side wall, if present, have a rounded profile in any cross section taken in the lateral direction of the harvest tray.

According to one exemplary embodiment, the short side walls have a rounded profile in any cross section taken in the longitudinal direction of the harvest tray.

According to one exemplary embodiment, all angles of the harvest tray are rounded.

Providing the harvest tray with rounded shapes, thereby avoiding sharp corners, is beneficial as it decreases the risk of damaging the herbs.

According to one exemplary embodiment, pot receiving recesses are formed in the base portion, arranged on each side of the dividing elements, as seen in the longitudinal direction of the harvest tray.

It has proven beneficial to provide recesses for the pots to be placed in, thereby reducing the risk of movement of the potted herbs in the reception cavity, which in turn reduces the risk of damage to them.

According to one exemplary embodiment, four pot receiving recesses are formed along each row of dividing elements.

According to one exemplary embodiment of the invention, a system is provided, said system comprising a harvest tray according to any of the exemplary embodiments of the first aspect of the present invention and a potted herb, wherein the height of the harvest tray is at least 50 % of the harvested potted herb, or more preferably at least 60 % of the harvested potted herb, or even more preferred at least 80 % of the harvested potted herb. The height of the harvest tray is preferably chosen to provide proper support for the potted herb, and is hence dependent on the size of the specific herb it is intended for. The height of the potted herb is intended to mean the height of both the herb and the pot.

According to one exemplary embodiment, pot receiving recesses are formed in the base portion of the harvest tray, said pot receiving recesses are arranged on each side of the dividing elements, as seen in the longitudinal direction of the harvest tray and each pot receiving recess is adapted to receive a pot so that when the pot is received an upper edge of the pot is located above a lower edge of each passage, with reference to the vertical direction from the base portion towards the top of the harvest tray. Hence, according to this embodiment, at least a rim of a pot will extend over the lower portion of the dividing elements, and thereby be placed in the passages of the reception cavity. By this, it will be easier to grip around the rim of the pot, as compared to if the rim would have been placed below the passage.

According to one exemplary embodiment, the upper edge of the pot extends 10 to 30 mm, and more preferably 15 - 25 mm and most preferably 20 mm above the lower edge of the passage.

According to one exemplary embodiment, the height of a pot is approximately 80 mm and the distance from the bottom of the harvest tray to the lower portion of the passage is approximately 60 mm.

According to one exemplary embodiment of the present invention, a method of harvesting potted herbs is provided. Said method comprising collecting a potted herb from a gully system, and placing said potted herb in a harvest tray according to the first aspect of the present invention.

By using the method the potted herb does not have to be placed in a bag by the operator picking the potted herb from the gully system. Hence, the manual handling of the potted herb in the green house may be decreased.

### Brief Description of the Drawings

For exemplifying purposes, the invention will be described in closer detail in the following with reference to embodiments thereof illustrated in the attached drawings, wherein:
Figure 1 shows a perspective view from above of a harvest tray according to an embodiment of the present invention,
Figure 2 shows a side view of a harvest tray according to an embodiment of the present invention, from one of the short sides of the harvest tray, and
Figure 3 shows a bottom view of a harvest tray according to an embodiment of the present invention.

### Detailed description of the drawings

The present invention will now be described more fully hereinafter with reference to the accompanying drawings, in which exemplary embodiments of the invention are shown. The invention may, however, be embodied in many different forms and should not be construed as limited to the embodiments set forth herein; rather, these embodiments are provided for thoroughness and completeness, and fully convey the scope of the invention to the skilled addressee. Like reference characters refer to like elements throughout the description.

A harvest tray 1 for carrying potted herbs 2 is disclosed in the drawings. The harvest tray 1 comprises a rectangular planar base portion 3. The rectangular base portion 3 has two parallel long sides 4, 5 and two parallel short sides 6, 7. The extension direction of the two long sides 4, 5 defines a longitudinal direction of the harvest tray. The harvest tray 1 in the illustrated embodiment also comprises three side walls 8, 10, which are arranged in the direction of the long sides 4, 5 of the base portion 3, respectively, and extending in a vertical direction to a top plane 14 of the harvest tray, opposite from the base portion 3. In the illustrated embodiment, two of the side walls are outer side walls 8 and one of the side walls is an intermediate side wall 10. The side walls define two reception cavities 11.

As the harvest tray 1 is open towards above, the top plane 14 is in this embodiment defined by the uppermost portions of the the side walls 8, 10.

The dimensions of the illustrated harvest tray are preferably 600 mm in the longitudinal direction and 300 mm in the transversal direction. The height of the harvest tray is in the illustrated embodiment approximately 240 mm.

The harvest tray also comprises dividing elements 12, arranged in a row in each of said reception cavities 11. The height of the dividing elements 12 are the same as the height of the side walls 8, 10. The dividing elements 12 are distanced from the side walls 8, 10 defining the reception cavity, at least along a portion of their height, such that an open passage 13 is formed on each side of the row of dividing elements 12 along a portion of the height of the reception cavity 11 in the longitudinal direction of said harvest tray 1. Each of the passages 13 is open towards each short side 6, 7 of the harvest tray 1 and towards the top 14 of said harvest tray. Hence, it is possible to access each one of the passages 13 from either above or from the short sides 6, 7 of the harvest tray 1.

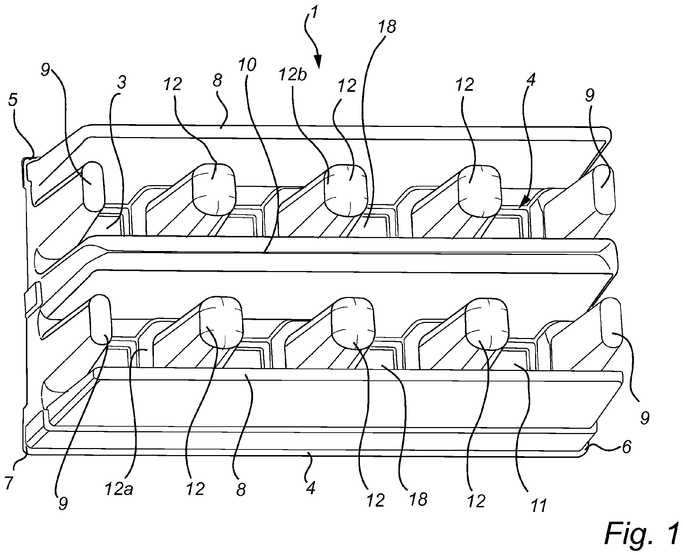

As can be best seen in Fig. 1, the dividing elements 12 are in contact with the adjacent side walls 8, 10 at their lower portions 12a. Hence, the lower portions 12a of the dividing elements 12 are broader than the upper portions 12b thereof. The height of the lower portions 12a are approximately 60 mm and the total height of the tray is approximately 240 mm. Thereby, each passage 13 extends over a portion of the distance between the top 14 of the harvest tray and downwards towards the base portion 3. In the illustrated embodiment, each passage 13 extends over approximately 75% of said distance. The specific relationship between the heights of the passages in relation to the height of the side walls is dependent on the size of the pots for the herbs intended to be placed in the harvest tray 1. The illustrated harvest tray is suitable for holding potted herbs having a height of approximately 300 mm, and of which the pot has a height of approximately 80 mm. In order to provide a stable holding of potted herbs, the height of the harvest tray is in the illustrated embodiment at least 80 percent of the height of the harvested potted herb.

The harvest tray 1 also comprises outer short side walls 9 provided at each short side 6, 7 of the harvest tray 1. The height of the outer short side walls 9 are the same as the height of the side walls 8, 10 and the dividing elements 12. The outer short side walls 9 are in contact with the adjacent side walls 8, 10 at their lower portions 9a thereof, and are distanced from the adjacent side walls 8, 10 at an upper portion 9b thereof. In the illustrated embodiment, the outer short side walls 9 have a similar cross-sectional profile as the dividing elements 12 and are aligned with each row of dividing elements 12. Thereby the open passages 13 can extend along the entire length of the harvest tray. The benefit of this will be explained further below when the use of the harvest tray is described in an automated handling system. The height of the lower portions 9a is, similarly to the height of the lower portions 12a of the dividing elements 12, approximately 60 mm.

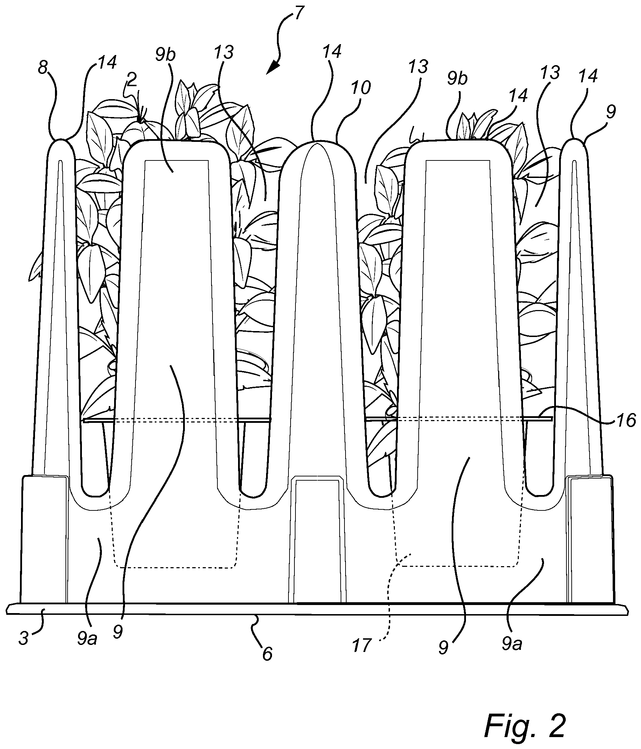

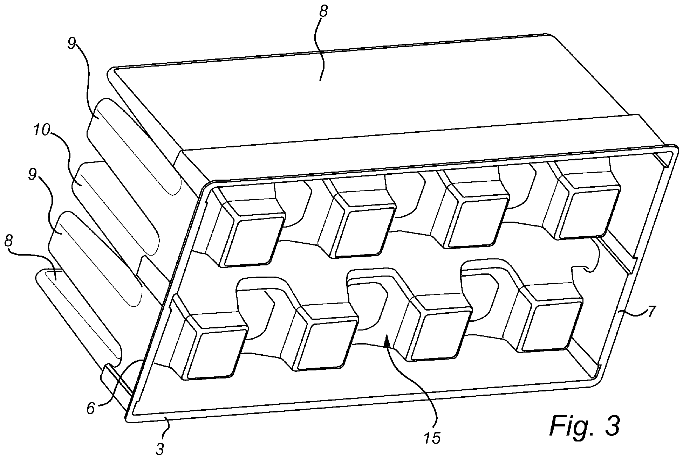

Fig. 3 shows the harvest tray in a perspective view from the bottom. As can be seen, the harvest tray is hollow with a rectangular opening 15 in the base portion 3. The opening 15 is provided on the side of the base portion 3 that is directed away from the reception cavities 11 of the harvest tray 1. Also the side walls 8, 10, short side walls 9 and dividing elements 12 are hollow. As is perhaps best seen in Fig. 2, the outer dimensions of the top 14 of the harvest tray 1 extends over a smaller area than the rectangular opening 15 in the base portion 3 of said harvest tray. This is achieved by providing the outer side walls 8, the intermediate side wall 10, the dividing elements 12, and the short side walls slanted, such that each of the elements has a smaller width at the top than at their respective portions being adjacent the base portion of the harvest tray. Thereby, the harvest trays 1 become stackable in one another.

As can also be seen in e.g. Figs. 1 and 2, the dividing elements have a rounded profile at the top side and the intermediate side wall 10 and outer side walls 8 have a rounded profile in any cross section taken in the lateral direction of the harvest tray. The short side walls 9 have a rounded profile in any cross section taken in the longitudinal direction of the harvest tray. By this, the risk that the potted herbs will be damaged when it comes in contact with the potted herb is lower.

The base portion 3 of the harvest tray 1 also comprises pot receiving recesses 18 formed in the base portion 3. The pot receiving recesses are arranged on each side of the dividing elements 12, as seen in the longitudinal direction of the harvest tray. In the illustrated embodiment, each reception cavity comprises four pot receiving recesses. Hence, the harvest tray comprises eight pot receiving recesses. The height of each pot receiving recess is adapted so that when the pot is received an upper edge of the pot is located above a lower edge of each passage, with reference to the vertical direction from the base portion towards the top of the harvest tray.

The harvest tray in the illustrated embodiment may preferably be made of linear low-density polyethylene (LLDPE) and may preferably be made by rotational molding.

The harvest tray 1 will now be described in use. In Fig. 2, potted herbs 2 are illustrated in the reception cavities 11. The potted herb 2 has been placed there by an operator picking the potted herb from e.g. a gully system in a green house. The harvest tray 1 is provided for receiving one potted herb 2 in each pot receiving recess, and the potted herb will thereby be supported by either one short side wall 9 and one dividing element 12 and an outer side wall 8 and the intermediate side wall 10, or by two dividing elements 12 and an outer side wall 8 and the intermediate side wall 10.

The dividing elements 12 and short side walls 9 are provided so that the rim 16 of the pot 17 extends above the respective lower portions 12a, 9a thereof. Thereby, the rims 16 are provided in the passages 13 of the harvest tray. This, together with the fact that the passages 13 extends along the length of the tray and are open upwards, makes it possible to use the harvest tray in e.g. an automated bagging system with lower risk of damaging the herbs.

Hence, when the operator has filled the harvest tray 1 with potted herbs 2, the harvest tray may be transferred to e.g. an automated bagging device. In such a device, a picking arm of a robot may enter the harvest tray through one of the outer short side walls 9 and grip the pot 17 provided between the outer short side wall 9 and the dividing element 12 below its rim 16. The potted herb 2 may thereafter be lifted straight up. When the next potted herb should be picked, the gripping element may be inserted into the empty space where the first potted herb was provided, brought to the next potted herb trough the passages 13 provided for between the outer side wall 8 and the intermediate side wall 10 and grip the next potted herb 2 below the rim 16 of its pot 17. Thereafter, also this potted herb may be lifted straight up. By using a harvest tray according to the present invention, the gripping arm or other means for gripping the potted herb does not need to enter into the reception cavities from directly above the potted herb it is about to grip. Thereby, the risk of damaging the potted herb is lower.

The above-described embodiments are not limited to the concept of the invention, but describe only the currently preferred embodiments. It is for example conceivable with other dimensions of the harvest tray than those described. It is also conceivable with harvest trays comprising a only one reception cavity, i.e. no intermediate side wall is provided. On the other hand, it is also conceivable with harvest trays comprising three or more reception cavities.

## Claims

1. A harvest tray (1) for carrying potted herbs (2), the harvest tray comprising:
- a rectangular base portion (3), having two parallel long sides (4, 5) and two parallel short sides (6, 7), wherein an extension direction of the two long sides defines a longitudinal direction of the harvest tray,
- a pair of side walls (8, 10), each side wall arranged in the direction of the long sides of the base portion (3), respectively, and extending in a vertical direction from the base portion, said side walls defining two sides of a reception cavity (11),
- dividing elements (12), arranged in a row in said reception cavity, said dividing elements being distanced from the side walls defining the reception cavity, at least along a portion of their height, **characterized in that** an open passage (13) is formed on each side of the row of dividing elements (12) along a portion of the height of the reception cavity (11) in the longitudinal direction of said harvest tray, each passage being open towards at least one short side and towards the top (14) of said harvest tray.

2. The harvest tray (1) according to claim 1, wherein said harvest tray comprises two outer side walls (8) extending along the long sides of the base portion (3) of said harvest tray and an intermediate side wall (10), wherein said intermediate side wall is arranged between the pair of outer side walls, such that two reception cavities (11) are provided in the harvest tray, wherein each reception cavity is provided with dividing elements (12) arranged along the longitudinal direction of the harvest tray, such that each reception cavity comprises two open passages (13).

3. The harvest tray (1) according to any one of claims 1 or 2, wherein the dividing elements (12) are in contact with the adjacent side walls (8, 10) at their lower portions (12a), such that each passage (13) extends over a portion of the distance between the top (14) of the harvest tray and downwards towards the base portion (3).

4. A harvest tray (1) according to claim 3, wherein each passage (13) extends over more than 50% of the distance from the harvest tray's top (14) towards the base portion (3), or more preferably over more than 60% of said distance, and even more preferably over more than 70% of said distance.

5. The harvest tray (1) according to any one of the preceding claims, further comprising:
- outer short side walls (9) provided at each short side of the harvest tray, said outer short side walls are in contact with the adjacent side walls (8, 10) at their lower portions (9a) thereof, and at least one of said outer short side walls are distanced from the adjacent side walls at an upper portion (9b) thereof.

6. The harvest tray (1) according to claim 5, wherein each of said outer short side walls (9) has a similar cross-sectional profile as said dividing elements (12) and are aligned with each row of dividing elements, whereby the open passages (13) extend along the entire length of the harvest tray.

7. The harvest tray (1) according to any one of the preceding claims, wherein the harvest tray is hollow with a rectangular opening (15) in the base portion (3), wherein said opening is provided on the side of said base portion that is directed away from the reception cavity (11) of the harvest tray.

8. The harvest tray (1) according to claim 7, wherein the outer dimensions of the top (14) of the harvest tray extend over a smaller area than the rectangular opening (15) in the base portion (3) of said harvest tray.

9. The harvest tray (1) according to any one of the preceding claims, wherein the dividing elements (12) have a rounded profile at the top side.

10. The harvest tray (1) according to any claim 2 or any one of claims 3 - 9 when dependent on claim 2, wherein the outer side walls (8) and the intermediate side wall (10), if present, have a rounded profile in any cross section taken in the lateral direction of the harvest tray.

11. The harvest tray (1) according to any one of the preceding claims, wherein pot receiving recesses (18) are formed in the base portion (3), arranged on each side of the dividing elements (12), as seen in the longitudinal direction of the harvest tray.

12. The harvest tray (1) according to claim 11, wherein four pot receiving recesses (18) are formed along each row of dividing elements (12).

13. A system comprising a harvest tray (1) according to any one of the preceding claims and at least one potted herb (2), wherein the height of the harvest tray (1) is at least 50 % of the harvested potted herb, or more preferably at least 60 % of the harvested potted herb, or even more preferred at least 80 % of the harvested potted herb.

14. A system according to claim 13, wherein pot receiving recesses (18) are formed in the base portion (3) of the harvest tray (1), said pot receiving recesses are arranged on each side of the dividing elements (12), as seen in the longitudinal direction of the harvest tray and is adapted to receive a pot (17) so that when the pot is received an upper edge (16) of the pot is located above a lower edge of each passage (13), with reference to the vertical direction from the base portion towards the top of the harvest tray.

15. A method of harvesting potted herbs, said method comprising:
- Collecting a potted herb (2) from a gully system,
- Placing said potted herb (2) in a harvest tray (1) according to any one of claims 1 - 13.

## Patentansprüche

1. Ernteschale (1) zum Tragen von Topfkräuterpflanzen (2), wobei die Ernteschale Folgendes umfasst:
- einen rechteckigen Basisabschnitt (3) mit zwei parallelen langen Seiten (4, 5) und zwei parallelen kurzen Seiten (6, 7), wobei eine Ausdehnungsrichtung der beiden langen Seiten eine Längsrichtung der Ernteschale definiert,
- ein Paar Seitenwände (8, 10), wobei jede Seitenwand jeweils in der Richtung der langen Seiten des Basisabschnitts (3) angeordnet ist und sich in eine vertikale Richtung von dem Basisabschnitt erstreckt, wobei die Seitenwände zwei Seiten einer Aufnahmevertiefung (11) definieren,
- Trennelemente (12), die in einer Reihe in der Aufnahmevertiefung angeordnet sind, wobei die Trennelemente von den die Aufnahmevertiefung definierenden Seitenwänden beabstandet sind, zumindest entlang eines Abschnitts ihrer Höhe, **dadurch gekennzeichnet, dass** ein offener Durchgang (13) auf jeder Seite der Reihe von Trennelementen (12) entlang eines Abschnitts der Höhe der Aufnahmevertiefung (11) in der Längsrichtung der Ernteschale gebildet wird, wobei jeder Durchgang zumindest zu einer kurzen Seite und zur Oberseite (14) der Ernteschale hin offen ist.

2. Ernteschale (1) nach Anspruch 1, wobei die Ernteschale zwei äußere Seitenwände (8), die sich entlang der langen Seiten des Basisabschnitts (3) der Ernteschale erstrecken, und eine Zwischenseitenwand (10) umfasst, wobei die Zwischenseitenwand zwischen dem Paar äußerer Seitenwände so angeordnet ist, dass zwei Aufnahmevertiefungen (11) in der Ernteschale vorgesehen sind, wobei jede Aufnahmevertiefung mit Trennelementen (12) versehen ist, die so entlang der Längsrichtung der Ernteschale angeordnet sind, dass jede Aufnahmevertiefung zwei offene Durchgänge (13) umfasst.

3. Ernteschale (1) nach einem der Ansprüche 1 oder 2, wobei die Trennelemente (12) mit den benachbarten Seitenwänden (8, 10) an deren unteren Abschnitten (12a) so in Kontakt stehen, dass jeder Durchgang (13) sich über einen Abschnitt des Abstands zwischen der Oberseite (14) der Ernteschale und abwärts in Richtung des Basisabschnitts (3) erstreckt.

4. Ernteschale (1) nach Anspruch 3, wobei jeder Durchgang (13) sich über mehr als 50% des Abstands von der Oberseite (14) der Ernteschale in Richtung des Basisabschnitts erstreckt, oder weiter bevorzugt über mehr als 60% dieses Abstands und sogar noch weiter bevorzugt über mehr als 70% dieses Abstands erstreckt.

5. Ernteschale (1) nach einem der vorhergehenden Ansprüche, die ferner Folgendes umfasst:
- kurze äußere Seitenwände (9), die an jeder kurzen Seite der Ernteschale vorgesehen sind, wobei die kurzen äußeren Seitenwände mit den angrenzenden Seitenwänden (8, 10) an deren unteren Abschnitten (9a) davon in Kontakt stehen und zumindest eine der kurzen äußeren Wände von den angrenzenden Seitenwänden an einem oberen Abschnitt (9b) davon beabstandet ist.

6. Ernteschale (1) nach Anspruch 5, wobei jede der kurzen äußeren Seitenwände (9) ein ähnliches Querschnittsprofil wie die Trennelemente (12) aufweist und mit eine Reihe von Trennelementen in eine Linie gebracht wird, wobei die offenen Durchgänge (13) sich über die gesamte Länge der Ernteschale erstrecken.

7. Ernteschale (1) nach einem der vorhergehenden Ansprüche, wobei die Ernteschale hohl ist und eine rechteckige Öffnung (15) im Basisabschnitt (3) aufweist, wobei die Öffnung an der Seite des Basisabschnitts vorgesehen ist, die von der Aufnahmevertiefung (11) der Ernteschale weg gewandt ist.

8. Ernteschale (1) nach Anspruch 7, wobei die Außenabmessungen der Oberseite (14) der Ernteschale sich über einen kleineren Bereich erstrecken als die rechteckige Öffnung (15) im Basisabschnitt (3) der Ernteschale.

9. Ernteschale (1) nach einem der vorhergehenden Ansprüche, wobei die Trennelemente (12) an der Oberseite ein abgerundetes Profil aufweisen.

10. Ernteschale (1) nach Anspruch 2 oder einem der Ansprüche 3 bis 9, wenn von Anspruch 2 abhängig, wobei die äußeren Seitenwände (8) und die Zwischenseitenwand (10), sofern vorhanden, in jedem Querschnitt entlang der seitlichen Richtung der Ernteschale ein abgerundetes Profil aufweisen.

11. Ernteschale (1) nach einem der vorhergehenden Ansprüche, wobei einen Topf aufnehmende Vertiefungen (18) in dem Basisabschnitt (3) gebildet sind, die auf jeder Seite der Trennelemente (12), bei Betrachtung in der Längsrichtung der Ernteschale, angeordnet sind.

12. Ernteschale (1) nach Anspruch 11, wobei vier einen Topf aufnehmende Vertiefungen (18) entlang jeder Reihe von Trennelementen (12) gebildet sind.

13. System, das eine Ernteschale (1) nach einem der vorhergehenden Ansprüche und zumindest eine Topfkräuterpflanze (2) umfasst, wobei die Höhe der Ernteschale (1) mindestens 50% der geernteten Topfkräuterpflanze beträgt, oder weiter bevorzugt mindestens 60% der geernteten Topfkräuterpflanze oder noch weiter bevorzugt mindestens 80% der geernteten Topfkräuterpflanze beträgt.

14. System nach Anspruch 13, wobei einen Topf aufnehmende Vertiefungen (18) im Basisabschnitt (3) der Ernteschale (1) gebildet sind, wobei die einen Topf aufnehmenden Vertiefungen auf jeder Seite der Trennelemente (12), bei Betrachtung in der Längsrichtung der Ernteschale, vorgesehen sind und dazu ausgelegt sind einen Topf (17) aufzunehmen, so dass der Topf, wenn der Topf an einer oberen Kante (16) davon aufgenommen wird, sich oberhalb einer unteren Kante jedes Durchgangs (13) befindet in Bezug auf die vertikale Richtung vom Basisabschnitt in Richtung der Oberseite der Ernteschale.

15. Verfahren zum Ernten von Topfkräuterpflanzen, wobei das Verfahren Folgendes umfasst:
- das Aufnehmen einer Topfkräuterpflanze (2) aus einem Rinnensystem,
- das Platzieren der Topfkräuterpflanze (2) in einer Ernteschale (1) nach einem der Ansprüche 1 bis 13.

## Revendications

1. Plateau de récolte (1) pour le transport d'herbes en pot (2), ce plateau de récolte comprenant :
- une section de base rectangulaire (3) dotée de deux côtés longs parallèles (4, 5) et de deux côtés courts parallèles (6, 7), un sens d'extension des deux côtés longs définissant un sens longitudinal du plateau de récolte,
- une paire de parois latérales (8, 10), chaque paroi latérale étant disposée respectivement dans le sens des côtés longs de la section de base (3) et s'étendant dans un sens vertical depuis la section de base, lesdites parois latérales définissant deux côtés d'une cavité de réception (11),
- des éléments de division (12) disposés en une rangée dans ladite cavité de réception, lesdits éléments de division étant espacés des parois latérales définissant la cavité de réception au moins sur une partie de leur hauteur, **caractérise en ce qu'**un passage ouvert (13) est formé sur chaque côté de la rangée d'éléments de division (12) sur une partie de la hauteur de la cavité de réception (11) dans le sens longitudinal dudit plateau de récolte, chaque passage étant ouvert vers au moins un côté court et vers le haut (14) dudit plateau de récolte.

2. Plateau de récolte (1) selon la revendication 1, dans lequel ledit plateau de récolte comprend deux parois latérales extérieures (8) s'étendant le long des côtés longs de la section de base (3) dudit plateau de récolte et une paroi latérale intermédiaire (10), ladite paroi latérale intermédiaire étant disposée entre la paire de parois latérales extérieures de manière à ce que deux cavités de réception (11) soient créées dans le plateau de récolte, chaque cavité de réception étant pourvue d'éléments de division (12) disposés dans le sens longitudinal du plateau de récolte, de sorte que chaque cavité de réception comprend deux passages ouverts (13).

3. Plateau de récolte (1) selon l'une quelconque des revendications 1 ou 2, dans lequel les éléments de division (12) sont en contact avec les parois latérales adjacentes (8,10) au niveau de leur sections inférieures (12a), de sorte que chaque passage (13) s'étend sur une partie de la distance entre le haut (14) du plateau de récolte et le bas vers la section de base (3).

4. Plateau de récolte (1) selon la revendication 3, dans lequel chaque passage (13) s'étend sur plus de 50 % de la distance entre le haut du plateau de récolte (14) et la section de base (3), ou plus préférentiellement sur plus de 60 % de ladite distance, et même plus préférentiellement sur plus de 70 % de ladite distance.

5. Plateau de récolte (1) selon l'une quelconque des revendications précédentes, comprenant en outre :
- des parois latérales courtes extérieures (9) prévues au niveau de chaque côté court du plateau de récolte, lesdites parois latérales courtes extérieures étant en contact avec les parois latérales adjacentes (8, 10) au niveau de leurs sections inférieures (9a), et au moins une desdites parois latérales courtes extérieures étant espacée des parois latérales adjacentes au niveau de sa section supérieure (9b).

6. Plateau de récolte (1) selon la revendication 5, dans lequel chacune desdites parois latérales courtes extérieures (9) a un profil de section transversale similaire à celui desdits éléments de division (12) et est alignée avec chaque rangée d'éléments de division, les passages ouverts (13) s'étendant sur toute la longueur du plateau de récolte.

7. Plateau de récolte (1) selon l'une quelconque des revendications précédentes, le plateau de récolte étant creux avec une ouverture rectangulaire (15) dans la section de base (3), ladite ouverture étant pratiquée sur le côté de ladite section de base qui est détourné de la cavité de réception (11) du plateau de récolte.

8. Plateau de récolte (1) selon la revendication 7, dans lequel les dimensions extérieures du haut (14) du haut du plateau de récolte s'étendent sur une plus petite surface que l'ouverture rectangulaire (15) de la section de base (3) dudit plateau de récolte.

9. Plateau de récolte (1) selon l'une quelconque des revendications précédentes, dans lequel les éléments de division (12) ont un profil arrondi au niveau du côté supérieur.

10. Plateau de récolte (1) selon la revendication 2 ou l'une quelconque des revendications 3 à 9 si elle dépend de la revendication 2, dans lequel les parois latérales extérieures (8) et la paroi latérale intermédiaire (10), si elle est présente, ont un profil arrondi dans toute section transversale prise dans le sens latéral du plateau de récolte.

11. Plateau de récolte (1) selon l'une quelconque des revendications précédentes, dans lequel des retraits de réception de pots (18) sont pratiqués dans la section de base (3), en étant disposés sur chaque côté des éléments de division (12), vus dans le sens longitudinal du plateau de récolte.

12. Plateau de récolte (1) selon la revendication 11, dans lequel quatre retraits de réception de pots (18) sont pratiqués le long de chaque rangée d'éléments de division (12).

13. Système comprenant un plateau récolte (1) selon l'une quelconque des revendications précédentes et au moins une herbe en pot (2), la hauteur du plateau de récolte (1) représentant au moins 50 % de l'herbe en pot récoltée ou plus préférentiellement au moins 60 % de l'herbe en pot récoltée ou même plus préférentiellement au moins 80 % de l'herbe en pot récoltée.

14. Système selon la revendication 13, dans lequel des retraits de réception de pots (18) sont pratiqués dans la section de base (3) du plateau de récolte (1), lesdits retraits de réception de pots étant pratiqués sur chaque côté des éléments de division (12), vus dans le sens longitudinal du plateau de récolte, et étant aptes à recevoir un pot (17) de sorte que, lorsque le pot est reçu, un bord supérieur (16) du pot se trouve au-dessus d'un bord inférieur de chaque passage (13) en se référant au sens vertical depuis la section de base en direction du haut du plateau de récolte.

15. Procédé de récolte d'herbe en pot, ledit procédé comprenant :
- la cueillette d'une herbe en pot (2) dans un système de puisard,
- le placement de ladite herbe en pot (2) dans un plateau de récolte (1) selon l'une quelconque des revendications 1 à 13.
